# EUROPÄISCHE PATENTANMELDUNG

(11) **EP 4 467 744 A1**
(43) Veröffentlichungstag der Anmeldung: **27.11.2024**
(21) Anmeldenummer: 24178254.9
(22) Anmeldetag: 27.05.2024
(51) Int. Cl.: E04D 13/14, B32B 15/085, B32B 27/08, B32B 27/32, B32B 11/08

(54) **PLASTISCH VERFORMBARER VERBUNDWERKSTOFF**

(30) Priorität: 25.05.2023 DE 202023102916 U
(71) Anmelder: BEplusC Selbstklebesyteme UG (haftungsbeschränkt), 41748 Viersen (DE)
(72) Erfinder: Kronenberg, Bernd, 41844 Wegberg (DE)
(74) Vertreter: Patentanwälte Olbricht Buchhold Keulertz

(57) **Zusammenfassung**

Bei einem Verbundwerkstoff (1) zur Abdichtung und / oder Abdeckung im Dach- und / oder Fassadenbereich eines Baukörpers, wobei der Verbundwerkstoff (1) zur wahlweisen Anlage an eine Kontur plastisch verformbar ist, mit einer Anzahl Substrate (2), welche wenigstens einen thermoplastischen Elastomer aufweist, und mit einer Anzahl als Streckmetall und / oder als Streckmetallgitter ausgestalteten Träger (3), wobei die Anzahl Träger (3) in eine oder die Anzahl Substrate (2) eingebettet ist, wird vorgeschlagen, dass eine Anzahl Substrate (2) Styrol-Ethylen-Butylen-Styrol aufweist. Weiterhin betrifft die Erfindung eine Abdeckungsanordnung (10) in einem Anschlussbereich mit dem Verbundwerkstoff (1) und ein Herstellungsverfahren des Verbundwerkstoffes (1).

## Beschreibung

Die Erfindung betrifft einen plastisch verformbaren Verbundwerkstoff nach den Merkmalen des Anspruchs 1, eine Abdeckungsanordnung mit dem Verbundwerkstoff sowie ein Verfahren zur Herstellung des Verbundwerkstoffes.

Ein gattungsgemäßer, als Abdeckmaterial bezeichneter Verbundwerkstoff ist aus DE 36 42 063 A1 bekannt. Die Lehre betrifft ein Abdeckmaterial zur Abdichtung und / oder Abdeckung im Dach- oder Fassadenbereich eines Baukörpers. Wesentlich ist, dass der Verbundwerkstoff plastisch verformbar ist. Dafür weist dieser gattungsgemäße Verbundwerkstoff ein Substrat in Art eines thermoplastischen Elastomers auf, in welchen zur Verstärkung ein Träger in Art eines Streckmetalls beziehungsweise eines Streckmetallgitters eingebettet ist.

Die bekannten Verbundwerkstoffe der genannten Art eint das Problem, dass das Substrat insbesondere im Fall einer dauerhaften Anwendung, d. h. über mehrere Monate oder Jahre, nachteilige Eigenschaften aufweist. Erstens neigen die bekannten Substrate zu einer weiteren, unbeabsichtigten plastischen Verformung, welche bspw. eine Dichtwirkung auf einem Dach herabsetzen kann. Zweitens weisen die bekannten Verbundwerkstoffe ausgeprägte, innere Grenzflächen oder Kavitäten auf, insbesondere zwischen dem Substrat und dem Träger, so dass die Beständigkeit gegenüber äußeren Umweltweinflüssen herabgesetzt werden kann. Drittens haben praktische Erfahrungen gezeigt, dass die bekannten Verbundwerkstoffe eine ausgeprägte Oberflächenklebrigkeit aufweisen, so dass die bekannten Verbundwerkstoffe im Anwendungsfall schnell stark verunreinigen und nicht ohne weiteres von Oberflächen wieder lösbar sind, was die Wiederverwertbarkeit erschwert.

Der vorliegenden Erfindung liegt die Aufgabe zugrunde, einen Verbundwerkstoff bereitzustellen, welcher die Nachteile der bekannten Verbundwerkstoffe überwindet. Insbesondere soll ein Verbundwerkstoff vorgeschlagen werden, welcher eine dauerhafte Abdichtung und / oder Abdeckung im Dach- oder Fassadenbereich eines Baukörpers ermöglicht.

Gelöst wird die Aufgabe durch einen Verbundwerkstoff nach den Merkmalen des Anspruchs 1, durch eine Anordnung des Verbundwerkstoffes nach Anspruch 6 sowie durch ein Verfahren zur Herstellung des Verbundwerkstoffs nach den Merkmalen des Anspruchs 9. Merkmale der Erfindung werden nachfolgend erörtert, wobei vorteilhafte Weiterentwicklungen der Erfindung unter anderem in den Unteransprüchen beschrieben werden.

Diese Gestaltungsmerkmale können im Zusammenhang mit der Erfindung verwirklicht werden oder auch unabhängig von der Erfindung eigenständig erfinderisch sein, und sie können entweder einzeln und unabhängig voneinander oder auch in einer beliebigen Kombination verwirklicht werden, einschließlich der Verwirklichung sämtlicher genannter Merkmale, sofern eine Kombination nicht ausdrücklich oder technisch zwingend ausgeschlossen ist.

Gemäß einem ersten Aspekt wird ein Verbundwerkstoff zur Abdichtung und / oder Abdeckung im Dach- oder Fassadenbereich eines Baukörpers vorgeschlagen, wobei der Verbundwerkstoff zur wahlweisen Anlage an eine Kontur plastisch verformbar ist, mit einer Anzahl Substrate, welche wenigstens einen thermoplastischen Elastomer aufweist, und mit einer Anzahl als Streckmetall und / oder als Streckmetallgitter ausgestalteten Träger, wobei die Anzahl Träger in eine oder die Anzahl Substrate eingebettet ist, und wobei die Anzahl Substrate Styrol-Ethylen-Butylen-Styrol aufweist.

Die Erfindung schlägt mit anderen Worten einen plastisch verformbaren Verbundwerkstoff vor, welcher eine Anzahl Substrate und eine Anzahl Träger aufweist, wobei eine oder die Anzahl Träger in einer Anzahl Substrat eingebettet ist, in der Art, dass Träger durch Substrat vollständig ummantelt wird. Die plastische Verformbarkeit des Verbundwerkstoffes ermöglicht eine einfache Anlage des Verbundwerkstoffes an weitestgehend jegliche Kontur, wobei die Formgebung, das heißt die Anlage des Verbundwerkstoffes an eine Kontur im Dach- oder Fassadenbereich eines Baukörpers, anwendungsabhängig entweder per Hand oder werkzeugunterstützt erfolgen kann.

Die Anzahl Träger wird durch zumindest eine Lage eines Streckmetalls und / oder eines Streckmetallgitters geschaffen, welches erstens eine Verstärkung des Verbundwerkstoffes bewirkt und zweitens die plastische Verformung nach einem Anlegen stabilisiert.

Vorschlagsgemäß ist für eine Anzahl Substrate, das heißt für mindestens ein, mehrere oder sämtliche Substrate ein thermoplastischer Elastomer (TPE) vorgesehen, und zwar Styrol-Ethylen-Butylen-Styrol (SEBS). Zusätzlich können ein oder mehrere weitere thermoplastische Elastomere vorgesehen sein. Eine Anzahl Substrate gewährleistet eine weitestgehend mediendichte Einbettung der Anzahl Träger. Vorliegend sind im Sinne der Erfindung als Medien sowohl flüssige Stoffe, wie Wasser, Öle oder dergleichen, als auch gasförmige Stoffe, insbesondere Stickstoff, Sauerstoff und Kohlendioxid (im Wesentlichen weitere Bestandteile der Umgebungsluft) bezeichnet.

Unter einer Anzahl ist im Kontext der vorgestellten Erfindung eine Einzahl oder Mehrzahl eines entsprechenden Merkmals zu verstehen.

Die Bereitstellung eines Verbundwerkstoffes mit SEBS für eine Anzahl Substrate ist besonders vorteilhaft, als dass erste Erfahrungen gezeigt haben, dass der erfindungsgemäße Verbundwerkstoff im Anwendungsfall ausgesprochen beständig bzw. widerstandsfähig ist. Auch unter Einwirkung von Umwelteinflüssen, wie die zuvor bezeichneten Medien sowie durch solare Strahlung mit UV- und / oder Wärmebeeinflussung, ist im Wesentlichen keine weitere, unbeabsichtigte plastische Verformung des Verbundwerkstoffes erkennbar. Dadurch wird sichergestellt, dass der plastisch verformte Verbundwerkstoff langfristig der Kontur eines Untergrunds bzw. einer Auflage unmittelbar anliegen kann, so dass insbesondere langfristig eine Dicht- bzw. Abdeckwirkung erzielt werden kann. Ebenso wenig vermögen es Öle, Säuren oder dergleichen, die Eigenschaften des Verbundwerkstoffes negativ zu beeinflussen. Eine Anzahl Substrate mit SEBS in Verbindung mit einer Anzahl Träger hat zudem den Vorteil, dass der Verbundwerkstoff einerseits hohe Festigkeiten aufweist, wobei dieser andererseits flexible und verformbar bzw. leicht zu verarbeiten ist.

Fernerhin ermöglicht SEBS eine im Wesentlichen vollständige Einbettung der Anzahl Träger in eine Anzahl Substrate. Die aus der Praxis bekannten Grenzflächen oder Kavitäten, insbesondere im Bereich der Anzahl Träger, können mittels SEBS vermieden werden. Bspw. werden die Zwischenräume des Streckmetalls bzw. des Streckmetallgitters vollständig gefüllt. Mit der Folge, dass der erfindungsgemäße Verbundwerkstoff auch langfristig sehr beständig ist.

Schließlich fehlt es dem erfindungsgemäßen Verbundwerkstoff an einer wesentlichen Oberflächenklebrigkeit, d. h. der Verbundwerkstoff entwickelt keine unbeabsichtigte Haftung auf einer Oberfläche. Eine Lagesicherung erfolgt durch Anlage an eine Kontur mittels plastischer Verformung, im Wesentlichen ausbildend einen Formschluss. Weiterhin hat die geringe Oberflächenklebrigkeit zur Folge, dass dem erfindungsgemäßen Verbundwerkstoff eine hohe Selbstreinigungswirkung zu Teil ist, indem Verunreinigungen bzw. Verschmutzungen bspw. mittels Regenwasser auf einfache Weise abgetragen werden, da Verunreinigungen dem Verbundwerkstoff im Wesentlichen nicht anhaften.

Weiterhin kann der Verbundwerkstoff vorteilhaft mehrere Substratschichten aufweisen.

Für den vorliegenden Verbundwerkstoff kann die Anzahl Substrate entweder in ein oder in mehreren Schichten angeordnet sein, wobei eine Anzahl Träger in einer Substratschicht eingebettet ist oder im Wesentlichen in einer Kontaktzone zwischen zwei Substratschichten. Mehrere Substratschichten sind vorteilhaft, als dass den einzelnen Schichten anforderungsabhängig Eigenschaften bzw. Funktionen verliehen werden können, beispielsweise eine bestimmte Farbgebung, eine bestimmte Elastizität, eine bestimmte Widerstandsfähigkeit gegenüber besonders aggressiven Medien oder dergleichen.

Bevorzugt im Zuge einer Koextrusion können mehrere Substratschichten miteinander verarbeitet sein. Vorteilhaft können ein oder mehrere Substratschichten recycliertes Substrat aufweisen. Besonders bevorzugt weist wenigstens eine Substratschicht im Wesentlichen originäres, das heißt nicht recycliertes Substrat auf. Diese originäre Substratschicht kann besonders bevorzugt mit recyclierten Substratschichten verbunden sein und kennzeichnet bspw. eine besonders hohe UV- und / oder Wärmebeständigkeit, so dass diese originäre Substratschicht im Anwendungsfall, d. h. in einer Gebrauchsstellung bzw. Gebrauchsanordnung bspw. auf einem Dach oder an einer Fassade, eine obere, äußere Oberfläche des Verbundwerkstoffes ausbilden kann.

Recycliertes Substrat kann TPE, insbesondere SEBS, bevorzugt in Verbindung mit Metallanteilen aufweisen, sofern bspw. ein Verbundwerkstoff im Anschluss an eine Gebrauchsperiode rückgebaut, zerkleinert und ggf. compoundiert wird.

Fernhin kann in einer Ausgestaltung vorgesehen sein, dass eine Substratschicht Farbpigmente aufweist und dazu bestimmt ist, in einer Gebrauchsanordnung sichtbar angeordnet zu sein.

Besonders vorteilhaft kann der Verbundwerkstoff wenigstens zwei Substratschichten und eine Anzahl Träger aufweisen. Für eine Anwendung auf einem gefärbten Dach beispielsweise kann die eine, vorzugsweise untere, einer Dachabdeckung zugewandte Substratschicht dafür schwarz sein, wohingegen die obere, in Gebrauchsstellung sichtbare Substratschicht entsprechend der Dachabdeckung eingefärbt ist. Der vorschlagsgemäße Verbundwerkstoff ermöglicht somit eine große Flexibilität für unterschiedliche Anwendungsbereiche, in denen eine unauffällige beziehungsweise sich in das Gesamtbild einfügende Optik gewünscht ist. Durch die Einfärbung einer Anzahl Substrate beziehungsweise einer Substratschicht sind keine sich lösenden Farbbeschichtungen zu befürchten, so dass eine dauerhafte Funktionsfähigkeit gewährleistet ist.

Ebenso kann vorgesehen sein, mehrere Ausgangs-Substrate durch den Herstellungsprozess des Verbundwerkstoffes zu einem im Wesentlichen homogenen Substratgemisch zu vermischen.

Weiterhin kann der Verbundwerkstoff bevorzugt eine erste und eine zweite Lage eines Trägers aufweisen, wobei die Lagen übereinander angeordnet und in der Anzahl Substrate und / oder Substratschichten eingebettet sind.

Mehrere Träger, insbesondere mehrere Trägerlagen sind vorteilhaft, in dem bestimmte Verformungseigenschaften gezielt in den Verbundwerkstoff eingebracht werden können. Beispielsweise kann vorgesehen sein, dass die Verformbarkeit in einer bestimmten Richtung, beispielsweise der Längsrichtung eines entsprechend länglich ausgeformten Verbundwerkstoffes, besonders einfach möglich ist, wohingegen in Querrichtung die Verformung deutlich erschwert ist. Auf diese Weise kann für den Verbundwerkstoff richtungsabhängig eine besondere Formstabilität ausgebildet sein.

In einer Weiterentwicklung kann bevorzugt vorgesehen sein, dass eine Anzahl Träger als Aluminium-Streckmetallgitter ausgestaltet ist.

Vorteilhaft kann es sich bei dem Träger um einen bi-axial streckbaren Träger handeln. Um eine bessere und leichtere Verformbarkeit zu erreichen, kann besonders bevorzugt ist eine Anzahl Träger als Aluminium-Streckmetallgitter ausgestaltet sein.

Neben der Anzahl Einbettungs-Substrate und der Anzahl Träger können weitere Zuschlagstoffe vorgesehen sein, beispielsweise UV-Absorber, farbgebende Pigmente, anorganische Füllstoffe, Anti-Oxidantien (nicht färbend), Stabilisatoren oder Ähnliche, welche insbesondere in die Anzahl Substrate eingemischt sind. Besonders vorteilhaft kann Calciumcarbonat als Zuschlagstoff vorgesehen sein, welches die Verformbarkeit verbessert.

Ein zweiter Aspekt der vorliegenden Erfindung betrifft eine Abdeckungsanordnung in einem Anschlussbereich, mit einer Anzahl aus einer Ebene insbesondere aufragenden und / oder abstehenden Elementen, vorliegend zusammenfassend mit aus einer Ebene ragenden Elementen bezeichnet, und mit einer Anzahl Verbundwerkstoffe, wobei eine Anzahl Verbundwerkstoffe der Ebene anliegt und eine Anzahl Elemente jeweils zumindest abschnittsweise umgibt, und wobei die Anzahl Verbundwerkstoffe dazu konfiguriert ist, die Anzahl Elemente gegenüber der Ebene abzudichten, wobei die Anzahl Verbundwerkstoffe wie zuvor beschrieben ausgestaltet sein kann.

Der vorgeschlagene Verbundwerkstoff ist insbesondere für eine mediendichte Abdeckung auf dem Dach, an der Fassade, im Hochbau und / oder in der Industrie geeignet. In einer Gebrauchsstellung wird vorliegend ein entsprechendes Dach, eine Fassade oder dergleichen zusammenfassend als Ebene bezeichnet.

Das aus einer Ebene ragende Element kann eine Leitung, insbesondere eine Rohrleitung oder eine Kabelleitung, ein Befestigungs- bzw. Haltemittel, einen Schornstein, einen Dachausbau, ein Entlüftungselement oder Ähnliches umfassen. Etwaige Befestigungs- bzw. Haltemittel können beispielsweise für Satellitenschüsseln, solare Anlagen, Fassadenelemente oder dergleichen vorgesehen sein.

Eine Verwendung des Verbundwerkstoffes zu Abdeckungszwecken, insbesondere im Steil- und Flachdachbereich, ist besonders vorteilhaft, sofern beispielsweise aus einer Ebene ragende Elemente, als Dachdurchdringungen oder dergleichen, eingesetzt werden und ein vorschlagsgemäßer Verbundwerkstoff an eine unregelmäßig geformte Untergrundkontur angelegt werden muss, und zwar mittels plastischer Verformung.

Vorteilhaft kann der Verbundwerkstoff vorliegend nur eine geringe Oberflächenklebrigkeit aufweisen, besonders bevorzugt im Wesentlichen keine Oberflächenklebrigkeit, beispielsweise weder eine Substrat-Oberschicht noch eine Substrat-Unterschicht, so dass Oberflächenverschmutzungen nach dem Verlegen des Verbundwerkstoffes stark reduziert werden können. Dadurch kann eine selbstreinigende Wirkung des Verbundwerkstoffes in Verbindung mit Niederschlag oder dergleichen ermöglicht werden.

Eine stoffschlüssige Verbindung kann bedarfsabhängig mittels vorgesehener Klebesysteme verwirklicht werden, insbesondere auf Basis von vernetzenden, dauerelastischen und dauerklebrigen Klebe-/Dichtstoffen, welche beispielsweise ganzflächig oder streifenförmig aufgetragen werden, insbesondere auf die Unterseite des Verbundwerkstoffes, welche einer abzudeckenden Ebene beziehungsweise einer Dach- oder Fassadenoberfläche anliegt.

Fernerhin kann besonders bevorzugt eine Anzahl Dichtmanschetten vorgesehen sein, welche in der erfindungsgemäßen Abdeckungsanordnung sowohl einer Anzahl aufragender Elemente als auch einer Anzahl Verbundwerkstoffe anliegend angeordnet ist.

Dichtmanschetten ermöglichen in Anschlussbereichen, das heißt in Bereichen, in denen ein Element aus einer Ebene ragt, in Verbindung mit einem Verbundwerkstoff eine besonders zuverlässige Abdichtung, welche zudem sehr einfach herstellbar ist. Vorzugsweise weist die Anzahl Dichtmanschetten SEBS auf, besonders bevorzugt im Wesentlichen SEBS. Damit ist die Dichtmanschette ohne Weiteres kompatibel mit dem erfindungsgemäßen Verbundwerkstoff, so dass eine langfristig dichte und widerstandsfähige Verbindung zwischen Verbundwerkstoff und Dichtmanschette verwirklicht werden kann. Zudem kann die Dichtmanschette vorteilhaft besonders elastisch ausgestaltet sein, um einem Element möglichst dicht anzuliegen und damit sicher abzudichten.

Weiterhin kann für die Abdeckungsanordnung vorgesehen sein, dass eine Anzahl Verbundwerkstoffe jeweils eine Anzahl Ausnehmungen aufweist, und sich eine Anzahl Elemente jeweils durch eine Anzahl Ausnehmungen erstreckt.

In einer besonders bevorzugten Ausgestaltung kann der vorschlagsgemäße Verbundwerkstoff in einer Abdeckungsanordnung zur Abdichtung von einer Anzahl Elementen vorgesehen sein, welche aus einer Ebene ragend, insbesondere aufsteigend, aufragend beziehungsweise abstehend, angeordnet ist. Derartige Anschlussbereiche, insbesondere in Dachflächen, bedürfen einer besonders sorgfältigen Abdichtung. Zur Herstellung der Abdichtung kann beispielsweise wie folgt vorgegangen werden:
- Bereitstellen des Verbundwerkstoffes, beispielsweise in Gestalt einer Verbundwerkstoff-Bahn,
- Einbringen einer Ausnehmung in den Verbundwerkstoff, beispielsweise mittels Stanzen oder Ähnlichem Verfahren, wobei die Ausnehmung derart ausgebildet ist, dass diese wenigstens ein aus der Ebene ragendes Element umfassen kann,
- Bereitstellen einer Dichtmanschette, wobei die Dichtmanschette bevorzugt als Folienbahn oder dergleichen ausgestaltet ist,
- Abdecken der Ausnehmung des Verbundwerkstoffes mittels Dichtmanschette und Verbinden der Dichtmanschette mit dem Verbundwerkstoff insbesondere im Randbereich der Ausnehmung, wobei die Dichtmanschette dazu vorteilhaft mit dem Verbundwerkstoff überlappend ausgestaltet ist,
- Optionales Einbringen einer Ausnehmung in die Dichtmanschette im Bereich der Ausnehmung des Verbundwerkstoffes, sofern die Dichtmanschette noch keine Ausnehmung aufweist,
- Hindurchführen eines Elements durch die Ausnehmungen des Verbundwerkstoffes und der Dichtmanschette, wobei das Element bevorzugt erst durch die Ausnehmung des Verbundwerkstoffes und dann durch die Ausnehmung der Dichtmanschette geführt ist, und
- Anlegen und Verformen des Verbundwerkstoffes entsprechend der Untergrundkontur der Ebene, wobei bei einer Dacheindeckung mit Dachziegeln der Verbundwerkstoff beispielsweise einer wellengleichen Ziegelkontur angelegt wird.

In einer Ausgestaltung kann die Dichtmanschette mit dem Verbundwerkstoff stoffschlüssig verbunden werden, beispielsweise mittels eines thermisch induzierten Stoffschlusses. Weiterhin kann ein Stoffschluss zusätzlich mit dem aus der Ebene ragenden Element geschaffen werden, beispielsweise mittels eines Klebstoffes.

In einer Ausgestaltung kann die Ausnehmung eine Flächengröße aufweisen, welche 20 bis 80 % der Größe einer Querschnittsfläche eines aus der Ebene ragenden Elementes entspricht, bevorzugt 40 bis 60 %, besonders bevorzugt 50 %.

Erste Versuche haben gezeigt, dass auch bei starken Verformungen des Verbundwerkstoffes keine Delaminierungen des Substrates von dem Träger, insbesondere von Streckmetall, auftreten.

Ein dritter Aspekt der Erfindung betrifft ein Herstellungsverfahren zur Herstellung eines Verbundwerkstoffes, wobei der Verbundwerkstoff wie zuvor beschrieben ausgestaltet sein kann, und wobei das Herstellungsverfahren in Art einer Koextrusion erfolgt, umfassend:
- Bereitstellen einer Anzahl Träger,
- Einführen der Anzahl Träger in eine Anzahl Werkzeuge,
- Bereitstellen einer Anzahl aufgeschmolzener Substrate in der Anzahl Werkzeuge,
- Einbetten der Anzahl Träger in die Anzahl Substrate, wobei die Anzahl Träger einen metallischen Werkstoff aufweist und die Anzahl Substrate Styrol-Ethylen-Butylen-Styrol aufweist.

Zur Herstellung des vorschlagsgemäßen Verbundwerkstoffes ist ein Koextrusionsverfahren vorgesehen, welches vorliegend auch als Koextrusionsbeschichtung bezeichnet wird. Im Wesentlichen wird eine Anzahl Träger bereitgestellt und in eine Anzahl Werkzeuge eingeführt. Weiterhin wird vorschlagsgemäß eine Anzahl aufgeschmolzener Substrate bereitgestellt und die Anzahl Träger in die Schmelze eingebettet. Besonders vorteilhaft ist, wenn jeweils dasselbe Werkzeug verwendet wird, in welches die Anzahl Träger eingeführt werden, in welchem die Anzahl aufgeschmolzener Substrate bereitgestellt und in welchem die Anzahl Träger in die Anzahl aufgeschmolzener Substrate eingebettet werden. Auf die vorgestellte Weise kann der vorschlagsgemäße Verbundwerkstoff besonders einfach, schnell und sicher hergestellt werden. Die Anzahl Träger wird vollständig von der Anzahl Substrate ummantelt, vorbeugend Korrosionserscheinungen oder Delaminierungen. Mit anderen Worten kann der vorgeschlagene Verbundwerkstoff in nur einem Prozessschritt hergestellt werden. Ebenso denkbar ist, dass der Verbundwerkstoff mittels Tiefzieh-Verfahren oder mittels Spritzgussverfahren hergestellt werden kann.

Die Bereitstellung des vorschlagsgemäßen Verbundwerkstoffes kann vorteilhaft in Form von Zuschnitten, Streifen oder Bahnen erfolgen.

In einer Ausgestaltung kann das Bereitstellen der Anzahl Träger durch Abrollen der Anzahl Träger von einer Rolle erfolgen.

Der Träger kann somit als Rollenware bereitgestellt werden und bedarfsabhängig zur Herstellung des Verbundwerkstoffes von einer Rolle abgerollt werden.

Weiterhin kann vorgesehen sein, dass die Anzahl Träger vor dem Einbetten gestreckt wird.

Das plastische Verformungsverhalten des vorschlagsgemäßen Verbundwerkstoffes kann maßgeblich über die Ausgestaltung des Trägers beeinflusst werden. Insbesondere kann richtungsabhängig festgelegt werden, inwieweit der Verbundwerkstoff betragsmäßig verformbar sein soll. Dazu kann vorgesehen sein, den Träger vor dem Einbetten zu Strecken, und zwar in Längsrichtung und / oder in Querrichtung. Ist beispielsweise als Träger ein Streckmetallgitter vorgesehen, kann über das Strecken des Trägers die Menge des Substrates festgelegt werden, welche in etwaige Gitterzwischenräume eingebettet wird. Auf diese Weise kann ein etwaiger Verformungswiderstand wahlweise festgelegt werden.

In einer Ausgestaltung kann vorgesehen sein, dass die Anzahl Träger vor dem Einbetten erhitzt wird.

Durch das Erhitzen der Anzahl Träger kann beispielsweise die Anbindung der Anzahl Substrate an die Anzahl Träger verbessert werden. Im Anwendungsfall können dadurch Delaminierungen vermindert werden, das heißt ein unbeabsichtigtes Lösen des Substrats vom Träger.

Weiterhin kann vorgesehen sein, dass die Anzahl Träger weichgeglüht wird.

Um insbesondere die Kaltverformbarkeit verbessern zu können, kann vorgesehen sein, dass eine Anzahl Träger vor dem Einbetten weichgeglüht wird. Dadurch kann die Verformbarkeit und damit die Anlage des Verbundwerkstoffes an entsprechende Konturen und die Formstabilität verbessert werden, so dass insbesondere eine etwaige Abdichtungsleistung verbessert wird.

Fernerhin kann vorgesehen sein, dass die Anzahl Substrate bahnartig von einer Rolle abrollend bereitgestellt wird und eine Anzahl Substratbahnen in eine Anzahl Werkzeuge eingeführt und aufgeschmolzen wird.

In einer Weiterentwicklung kann vorgesehen sein, dass die Anzahl Substrate bahnartig von einer Rolle abrollend bereitgestellt wird und eine Anzahl Substratbahnen in eine Anzahl Werkzeuge eingeführt und aufgeschmolzen wird und dadurch die Anzahl Träger in die Anzahl Substrate aufgenommen und durch die Schmelze vorteilhaft vollständig ummantelt wird.

Entsprechend dicke Substratbahnen sind vorteilhaft, welche mit der Anzahl Träger zusammengeführt werden, um eine im Wesentlichen vollständige Einbettung gewährleisten zu können. Eine vollständige Einbettung kann beispielsweise eine unbeabsichtigte, die Funktionsfähigkeit herabsetzende Korrosion der Anzahl Träger bedingen.

Der vorschlagsgemäße Verbundwerkstoff ist vorteilhaft,
- weil durch einen Mehrschichtaufbau und das verbesserte Produktionserfahren (Koextrusionsbeschichtung) bis zu 100 % Regenerat für die Verbundschichten verarbeitet werden können,
- weil ein deutlich verbesserter CO2-Fußabdruck realisierbar ist; Beispielsweise müssen Materialien nur einmal im Fertigungsprozess, insbesondere mittels Wärmezufuhr, aufgeschmolzen werden; Weiterhin schont der Einsatz von Rezyklat den allgemeinen Ressourcenaufwand,
- weil die Längsseiten des Erzeugnisses, das heißt des Verbundwerkstoffes, geschlossen und nur die kurzen Schnittkanten quer zur Laufrichtung offen sind, kann ein wesentlich verbesserter Schutz gegen evtl. eindringende Feuchtigkeit und daraus resultierender Delamination etwaiger Werkstoff-Verbundschichten beziehungsweise von der Anzahl Substrate von der Anzahl Träger besteht,

- weil Oberflächenverschmutzungen nach dem Verlegen des Verbundwerkstoffes stark reduziert werden, da das vorschlagsgemäß eingesetzte und modifizierte Material für die Ober- und Unterschicht im Wesentlichen keine Oberflächenklebrigkeit aufweist,
- weil ein Klebesystem aus vernetzendem, dauerelastischen und dauerklebrigen Klebe-/Dichtstoff der ganzflächig oder streifenförmig auf der Unterseite aufgetragen werden kann, welches die Anwendung vereinfacht,
- weil der Verbund in Längsrichtung ein Dehnvermögen von 30 % bis zu 100 % und in Querrichtung von 10 % bis zu 30 % aufweisen kann.

Weitere Merkmale, Einzelheiten und Vorteile der Erfindung ergeben sich aus dem Wortlaut der Ansprüche sowie aus der folgenden Beschreibung von Ausführungsbeispielen anhand der rein schematischen Zeichnungen, wobei einzelne Merkmale oder eine Kombination von Merkmalen der dargestellten Ausführungsbeispiele auch unabhängig von der übrigen Ausgestaltung verwirklicht sein können. Dabei zeigt
- Fig. 1: eine Explosionsdarstellung eines ersten Ausführungsbeispiels eines Verbundwerkstoffs in perspektivischer Ansicht,
- Fig. 2: eine Seitenansicht des Ausführungsbeispiels aus Fig. 1 im Querschnitt,
- Fig. 3a, b: Draufsichten auf ein Streckmetallgitter als Beispiel für einen Träger im nicht-verformten und nichtgestreckten Zustand (Fig. 3a) und im gestreckten Zustand (Fig. 3b),
- Fig. 4: eine Explosionsdarstellung eines zweiten Ausführungsbeispiels eines Verbundwerkstoffs in perspektivischer Ansicht,
- Fig. 5: eine Seitenansicht des Ausführungsbeispiels aus Fig. 4 im Querschnitt,
- Fig. 6: eine Seitenansicht eines dritten Ausführungsbeispiels des Verbundwerkstoffes im Querschnitt,
- Fig. 7: eine Seitenansicht eines vierten Ausführungsbeispiels des Verbundwerkstoffes im Querschnitt,
- Fig. 8: eine perspektivische Ansicht auf eine abdichtende Abdeckungsanordnung in einem Anschlussbereich unter Verwendung eines Ausführungsbeispiels des vorgeschlagenen Verbundwerkstoffes,
- Fig. 9: eine perspektivische Ansicht auf eine weitere, exemplarische Abdeckungsanordnung,
- Fig. 10: eine perspektivische Ansicht auf die Unterseite eines verformten Verbundwerkstoffes, und
- Fig. 11a,b: eine perspektivische Ansicht auf die Einlaufseite (Fig. 11a) und die Auslaufseite (Fig. 11b) eines Doppel-Breitschlitzwerkzeuges zur Herstellung eines Ausführungsbeispiels des Verbundwerkstoffes.

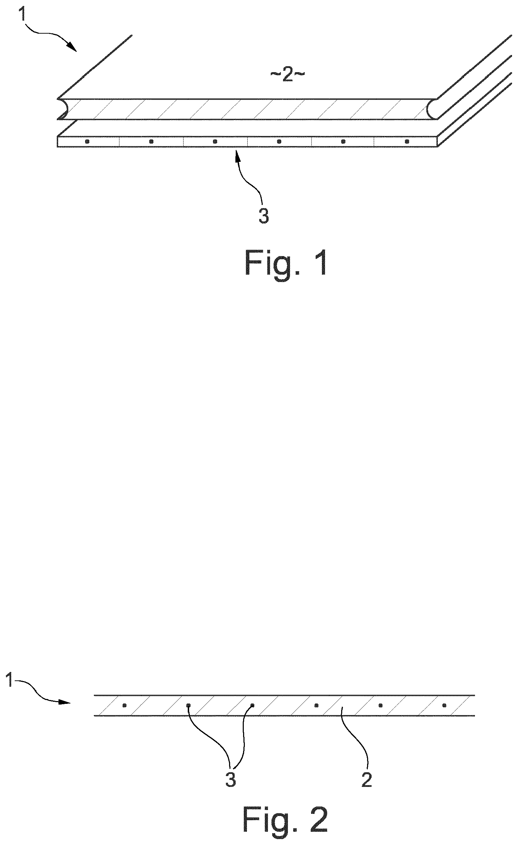

Fig.1 zeigt in Art einer Explosionsdarstellung ein erstes Ausführungsbeispiel eines plastisch verformbaren Verbundwerkstoffes 1 in perspektivischer Ansicht. Einerseits ist eine als Substrat 2 bezeichnete Decklage dargestellt, welche einen thermoplastischen Elastomer aufweist, und zwar Styrol-Ethylen-Butylen-Styrol. Andererseits ist als Träger 3 ein Streckmetall in Art eines Streckmetallgitters vorgesehen, welches Aluminium aufweist. Aus Darstellungsgründen ist der Träger 3 vereinfachend matten- beziehungsweise bandartig dargestellt.

In Fig. 2 ist eine Seitenansicht des Ausführungsbeispiels aus Fig. 1 im Querschnitt dargestellt. Der Träger 3 ist in das Substrat 2 eingebettet, so dass dieser von dem Substrat 2 vollumfänglich ummantelt ist. Etwaige Zwischenräume des Streckmetalls bzw. des Streckmetallgitters sind vollständig gefüllt.

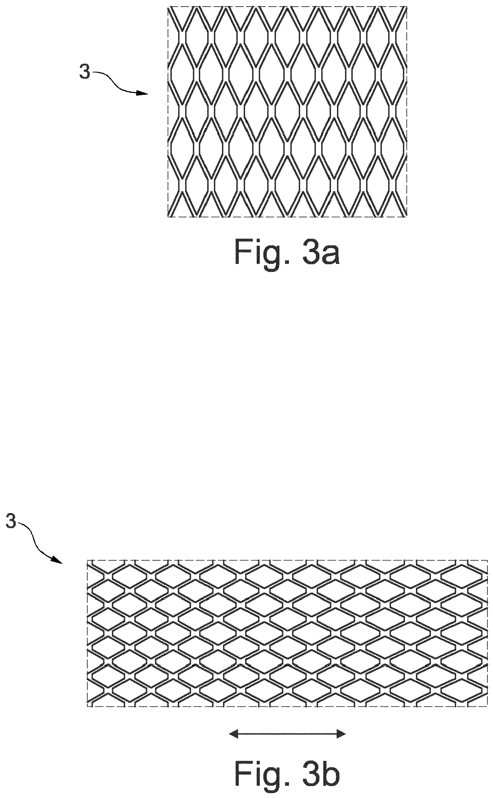

Zur Darstellung eines möglichen Trägers 3 zeigt Fig. 3a eine Draufsicht auf ein Streckmetallgitter im nicht-verformten und nicht-gestreckten Zustand. Im Gegensatz dazu ist in Fig. 3b das gleiche Streckmetallgitter nach einer Verformung durch Strecken in Längsrichtung dargestellt, wobei die Streckrichtung durch einen Doppelpfeil angedeutet ist. Ein derartiges Streckmetallgitter bildet vorliegend einen Träger 3, unter anderem in dem Ausführungsbeispiel aus Fig. 1, 4, 6 und 7.

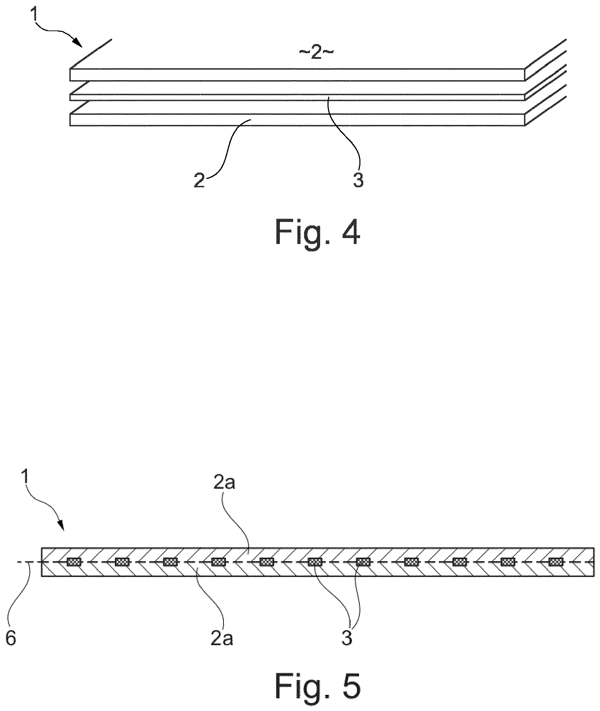

Fig.4 zeigt in Art einer Explosionsdarstellung ein zweites Ausführungsbeispiel eines plastisch verformbaren Verbundwerkstoffes 1 in perspektivischer Ansicht, aufweisend nunmehr zwei Substrate 2 sowie einen Träger 3, welcher, wie zuvor, aus Darstellungsgründen vereinfachend mattenbeziehungsweise bandartig dargestellt ist.

In Fig. 5 ist eine Seitenansicht des Ausführungsbeispiels aus Fig. 4 im Querschnitt dargestellt. Der Träger 3 ist in zwei Substrate 2 eingebettet. Die Substrate 2 weisen jeweils einen thermoplastischen Elastomer auf, insbesondere Styrol-Ethylen-Butylen-Styrol, wobei die beiden Substrate 2 durch das Aufschmelzen miteinander verbunden werden können. In dem vorliegenden Ausführungsbeispiel bilden die Substrate 2 zwei Substrat-Schichten 2a, welche in einer Grenzfläche 6, in Fig. 5 mittels gestrichelter Linie angedeutet, einander anliegen und miteinander stoffschlüssig verbunden sind.

Alternativ dazu können die Substrate 2 in der Art aufgeschmolzen werden, dass die Substrate 2 miteinander vermischt werden und eine Trennung in ein erstes und ein zweites Substrat 2 nicht ohne Weiteres mehr möglich ist.

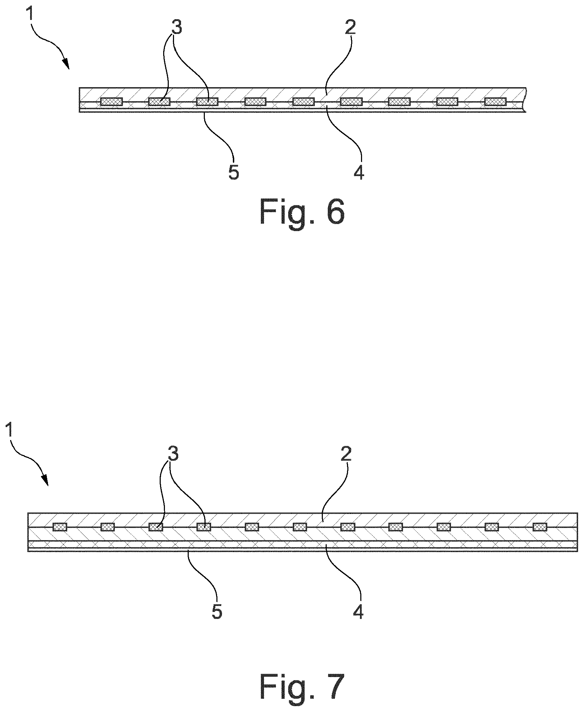

Ein drittes Ausführungsbeispiel des Verbundwerkstoffes 1 ist in Fig. 6 im Querschnitt dargestellt, wobei der Verbundwerkstoff 1 aus Fig. 2 zusätzlich ein Haftsubstrat beziehungsweise eine Haftschicht 4 sowie eine Abdeckung 5 für die Haftschicht 4 aufweist. Die Abdeckung 5 kann beispielsweise dazu dienen, die Haftschicht 4 temporär vor dem Einbauen zu schützen, insbesondere vor unbeabsichtigten Verunreinigungen oder dergleichen. Vor dem Anlegen des Verbundwerkstoffes 1 kann die Abdeckung 5 entfernt werden und der Verbundwerkstoff 1 kann weiterhin angelegt werden durch ein Verformen des Verbundwerkstoffes 1 folgend den Konturen des Untergrunds, beispielsweise den Konturen einer Ebene 11, beispielsweise eine Dachfläche, eine Fassade oder Ähnliches, und / oder eines aus der Ebene ragenden Elements 12, beispielsweise ein Schornstein, ein Entlüftungselement oder Ähnliches.

Ein viertes Ausführungsbeispiel des Verbundwerkstoffes 1 ist in Fig. 7 im Querschnitt dargestellt, wobei der Verbundwerkstoff 1 aus Fig. 5 zusätzlich ein Haftsubstrat beziehungsweise eine Haftschicht 4 sowie eine Abdeckung 5 für das Haftsubstrat aufweist.

Unabhängig von den dargestellten Ausführungsbeispielen kann der Verbundwerkstoff 1 insbesondere eine Anzahl Haftschichten 4 und / oder Abdeckungen 5 aufweisen, und zwar auf der Ober- und / oder Unterseite.

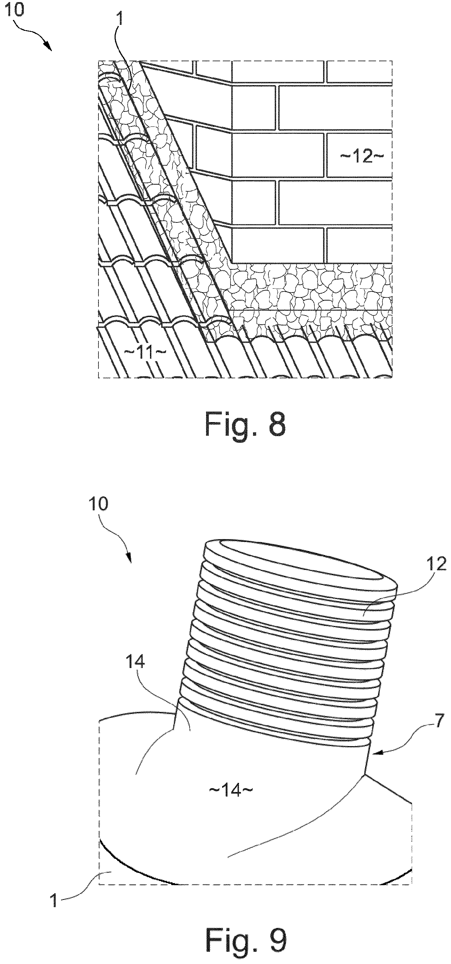

Fig. 8 zeigt eine perspektivische Ansicht auf eine abdichtende Abdeckungsanordnung 10 in einem Anschlussbereich eines Steildaches unter Verwendung eines Ausführungsbeispiels des vorgeschlagenen Verbundwerkstoffes 1. Vorliegend bildet ein Schornstein ein aus der Ebene 11, das heißt aus der Dachfläche, aufragendes Element 12. Im Anschlussbereich von Dachfläche und Schornstein ist ein vorschlagsgemäßer Verbundwerkstoff 1 angeordnet, wobei dieser den Konturen der Dachfläche, hier den Dachziegeln, sowie dem Mauerwerk des Schornsteins folgend plastisch verformt wurde für eine Abdichtung des Anschlussbereichs.

Eine perspektivische Ansicht auf eine weitere, beispielhafte Abdeckungsanordnung 10 zeigt Fig. 9. Dargestellt ist der Verbundwerkstoff 1 mit einer Ausnehmung 7 (aus Darstellungsgründen nicht in Fig. 9 nicht sichtbar), durch welche sich ein vorliegend als Wellrohr ausgestaltetes, aufragendes Element 12 erstreckt. In Art eines Substratkragens ist das Wellrohr von einer hochelastischen Dichtmanschette 14 umgeben, welche sowohl dem Wellrohr als auch dem Verbundwerkstoff 1 abdichtend anliegt, wobei das Wellrohr durch eine Ausnehmung 7 in der Dichtmanschette geführt ist. Die auf dem Verbundwerkstoff 1 aufliegende Dichtmanschette 14 ist mit dem Verbundwerkstoff 1 stoffschlüssig verbunden. Insgesamt kann dadurch ein mediendichter Anschlussbereich geschaffen werden.

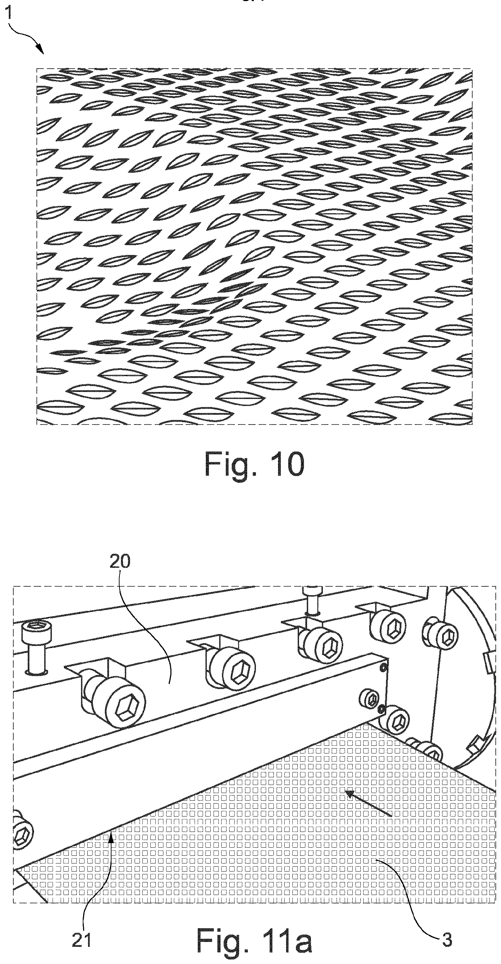

Eine perspektivische Ansicht auf die Unterseite eines dreidimensional verformten Verbundwerkstoffes 1 zeigt Fig. 10. Im Allgemeinen dient die Anzahl Träger 3 innerhalb des Verbundwerkstoffes 1 dazu, dem elastischen Verhalten der Anzahl Substrate 2 entgegenzuwirken und eine plastische Verformung dauerhaft aufrechtzuerhalten, insbesondere zur Abdichtung und / oder Abdeckung im Dach- oder Fassadenbereich eines Baukörpers.

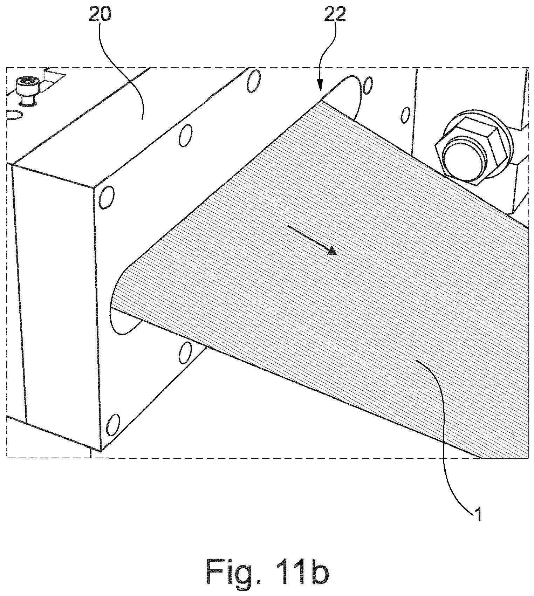

Eine perspektivische Ansicht auf die Einlaufseite 21 eines Werkzeuges 20, und zwar eines Doppel-Breitschlitzwerkzeuges, zur Herstellung eines Verbundwerkstoffes 1 der vorgestellten Art zeigt Fig. 11a, wobei ein Träger 3 in Art eines Aluminium-Streckmetalls band- beziehungsweise mattenartig abgerollt und in das Werkzeug 20 eingezogen wird. Die Einführrichtung des Trägers 3 ist durch einen Pfeil angedeutet. Innerhalb des Werkzeugs 20 wird aufgeschmolzenes Substrat 2 bereitgestellt (vorliegend aus Darstellungsgründen nicht sichtbar), durch welches der Träger 3 hindurchgeführt wird, so dass der Träger 3 vollumfänglich von dem Substrat 2 ummantelt wird. Fig. 11b zeigt die Auslaufseite 22 desselben Doppel-Breitschlitzwerkzeuges, wobei ein vorschlagsgemäßer Verbundwerkstoff 1 aus dem Werkzeug 20 heraustritt. Die Austrittsrichtung ist mittels Pfeil andeutet. Infolge der vollständigen Ummantelung ist der Träger 3 weder auf der sichtbaren Oberseite, noch an der Seitenkante des Verbundwerkstoffes 1 sichtbar.

Die Erfindung ist nicht auf eine der vorbeschriebenen Ausführungsformen beschränkt, sondern in vielfältiger Weise abwandelbar.

### Bezugszeichen:

- 1: Verbundwerkstoff
- 2: Substrat
- 2a: Substrat-Schicht
- 3: Träger
- 4: Haftschicht
- 5: Abdeckung
- 6: Grenzfläche
- 7: Ausnehmung
- 10: Abdeckungsanordnung
- 11: Ebene
- 12: Aufragendes Element
- 14: Dichtmanschette
- 20: Werkzeug
- 21: Einlaufseite
- 22: Auslaufseite

## Patentansprüche

1. Verbundwerkstoff (1) zur Abdichtung und / oder Abdeckung im Dach- und / oder Fassadenbereich eines Baukörpers, wobei der Verbundwerkstoff (1) zur wahlweisen Anlage an eine Kontur plastisch verformbar ist,
mit einer Anzahl Substrate (2),
welche wenigstens einen thermoplastischen Elastomer aufweist,
und mit einer Anzahl als Streckmetall und / oder als Streckmetallgitter ausgestalteten Träger (3),
wobei die Anzahl Träger (3) in eine oder die Anzahl Substrate (2) eingebettet ist,
**dadurch gekennzeichnet,**
**dass** eine Anzahl Substrate (2) Styrol-Ethylen-Butylen-Styrol aufweist.

2. Verbundwerkstoff (1) nach Anspruch 1,
**dadurch gekennzeichnet,**
**dass** der Verbundwerkstoff mehrere Substratschichten (2a) aufweist.

3. Verbundwerkstoff (1) nach Anspruch 2,
**dadurch gekennzeichnet,**
**dass** eine Substratschicht (2a) Farbpigmente aufweist und dazu bestimmt ist, in einer Gebrauchsanordnung sichtbar angeordnet zu sein.

4. Verbundwerkstoff (1) nach einem der vorhergehenden Ansprüche ,
**gekennzeichnet durch,**
eine erste und eine zweite Lage eines Trägers (3), wobei die Lagen übereinander angeordnet und in der Anzahl Substrate (2) und / oder Substratschichten (2a) eingebettet sind.

5. Verbundwerkstoff (1) nach einem der vorhergehenden Ansprüche,
**dadurch gekennzeichnet,**
**dass** eine Anzahl Träger (3) als Aluminium-Streckmetallgitter ausgestaltet ist.

6. Abdeckungsanordnung (10) in einem Anschlussbereich, mit einer Anzahl aus einer Ebene (11) ragenden Elementen (12),
und mit einer Anzahl Verbundwerkstoffe,
wobei eine Anzahl Verbundwerkstoffe der Ebene (11) anliegt und eine Anzahl Elemente (12) jeweils zumindest abschnittsweise umgibt,
und wobei die Anzahl Verbundwerkstoffe dazu konfiguriert ist, die Anzahl Elemente (12) gegenüber der Ebene (11) abzudichten,
**dadurch gekennzeichnet,**
**dass** die Anzahl Verbundwerkstoffe (1) nach einem der vorhergehenden Ansprüche ausgestaltet ist.

7. Abdeckungsanordnung (10) nach Anspruch 6,
**dadurch gekennzeichnet,**
**dass** eine Anzahl Dichtmanschetten (14) sowohl einer Anzahl Elemente (12) als auch einer Anzahl Verbundwerkstoffe (1) anliegend angeordnet ist.

8. Abdeckungsanordnung (10) nach Anspruch 6 oder 7, **dadurch gekennzeichnet,**
**dass** eine Anzahl Verbundwerkstoffe (1) jeweils eine Anzahl Ausnehmungen (7) aufweist,
und sich eine Anzahl Elemente (12) jeweils durch eine Anzahl Ausnehmungen (7) erstreckt.

9. Herstellungsverfahren zur Herstellung eines Verbundwerkstoffes (1) nach einem der Ansprüche 1 bis 5 wobei das Herstellungsverfahren in Art einer Koextrusion erfolgt, umfassend:
• Bereitstellen einer Anzahl Träger (3),
• Einführen der Anzahl Träger (3) in eine Anzahl Werkzeuge (20),
• Bereitstellen einer Anzahl aufgeschmolzener Substrate (2) in der Anzahl Werkzeuge (20),
• Einbetten der Anzahl Träger (3) in die Anzahl Substrate (2),
wobei die Anzahl Träger (3) einen metallischen Werkstoff aufweist und die Anzahl Substrate (2) Styrol-Ethylen-Butylen-Styrol aufweist.

10. Herstellungsverfahren nach Anspruch 9,
**dadurch gekennzeichnet,**
**dass** das Bereitstellen der Anzahl Träger (3) durch Abrollen der Anzahl Träger (3) von einer Rolle erfolgt.

11. Herstellungsverfahren nach Anspruch 9 oder 10,
**dadurch gekennzeichnet,**
**dass** die Anzahl Träger (3) vor dem Einbetten gestreckt wird.

12. Herstellungsverfahren nach einem der Ansprüche 9 bis 11, **dadurch gekennzeichnet,**
**dass** die Anzahl Träger (3) vor dem Einbetten erhitzt wird.

13. Herstellungsverfahren nach Anspruch 12,
**dadurch gekennzeichnet,**
**dass** die Anzahl Träger (3) weichgeglüht wird.

14. Herstellungsverfahren nach einem der Ansprüche 9 bis 13, **dadurch gekennzeichnet,**
**dass** die Anzahl Substrate (2) bahnartig von einer Rolle abrollend bereitgestellt wird und eine Anzahl Substratbahnen in eine Anzahl Werkzeuge (20) eingeführt und aufgeschmolzen wird.
